# EUROPÄISCHE PATENTSCHRIFT

(11) **EP 1 054 824 B1**
(45) Veröffentlichungstag und Bekanntmachung des Hinweises auf die Patenterteilung: **11.06.2003**
(21) Anmeldenummer: 99913077.6
(22) Anmeldetag: 12.02.1999
(51) Int. Cl.: B65G 17/00, B65G 15/00, B65G 15/30, G09F 19/22

(54) **TRANSPORTPLATTE ALS WERBETRÄGER**
CONVEYOR PLATE AS PUBLICITY SUPPORT
PLAQUE DE TRANSPORT SERVANT DE SUPPORT PUBLICITAIRE

(30) Priorität: 13.02.1998 DE 19805934; 30.06.1998 DE 19829242
(43) Veröffentlichungstag der Anmeldung: 29.11.2000
(73) Patentinhaber: Stommel, Andreas, 50670 Köln (DE)
(72) Erfinder: Stommel, Andreas, 50670 Köln (DE)
(74) Vertreter: Stute, Ivo, Dipl.-Ing.
(86) Internationale Anmeldenummer: DE9900431
(87) Internationale Veröffentlichungsnummer: WO99041165

(56) Entgegenhaltungen:
- DE-A- 19 640 834
- US-A- 4 979 591
- US-A- 5 165 526
- US-A- 5 244 080

## Beschreibung

Die vorliegende Erfindung betrifft eine Transportplatte eines endlosen, modularen Förderbandes mit mindestens einer Oberfläche, die einen Kautschuk enthält. Die Erfindung betrifft auch ein Verfahren zum Bedrucken Kautschuk enthaltender Oberflächen.

Bei endlosen, modularen Förderbändern unterscheidet man zwischen Förderbändern mit sich nicht überlappenden Transportplatten und Förderbändern mit sich überlappenden Transportplatten. Bei beiden Bandarten sind die Transportplatten jeweils einzeln auswechselbar.

Solche Förderbänder werden unter anderem eingesetzt, um das Gepäck von Flugreisenden nach ihrer Ankunft am Flughafen zu befördern. Gerade bei Förderbändern für den Einsatz an Flughäfen sind die Sicherheitsanforderungen insbesondere an die elektrostatischen Eigenschaften sehr hoch. So muß in jedem Fall vermieden werden, daß sich die Bauteile der Förderbänder statisch aufladen, um eine Funkenentladung sicher vermeiden zu können.

Den Förderbändern wird eine hohe Aufmerksamkeit der auf Gepäck wartenden Reisenden zuteil, die unter einer Vielzahl von Gepäckstücken das jeweils richtige herausgreifen möchten. Daher sind die Förderbänder besonders gut zu Werbezwecken geeignet, zumal sich die Reisenden nicht der darauf angebrachten Werbung entziehen können. Da es regelmäßig ein Bestreben der Werbewirtschaft ist, mit einem möglichst geringen Aufwand ein möglichst breites Publikum einer Werbung auszusetzen, hat es bereits viele Ansätze gegeben, diese Förderbänder als Werbeflächen zu nutzen.

Aus der US 5,209,340 sind Gepäckförderbänder mit sich überlappenden bzw. nicht überlappenden Transportplatten bekannt, wobei auf den Transportplatten ein Film aus beispielsweise Polyethylen als Informationsträger aufgeklebt ist. Insbesondere bei Förderbändern mit sich überlappenden Transportplatten besteht hierbei der wesentliche Nachteil, daß der aufgeklebte Film nicht in den Überlappungsbereich hineinragen darf. Würde der aufgeklebte Film in den Überlappungsbereich hineinragen, bestünde einerseits die Gefahr, daß sich die aufgeklebte Folie im Überlappungsbereich frühzeitig von der Transportplatte ablöst. Auf der anderen Seite bestünde aufgrund der nicht vermeidbaren Reibung die Gefahr einer statischen Aufladung und somit ein erhebliches Betriebsrisiko.

In der US 5,165,526 ist ebenso ein Gepäckförderband mit sich überlappenden Transportplatten offenbart. Die Transportplatten bestehen aus transparentem Polycarbonat, wobei Kunststoffolien als Informationsträger in eine hierfür an der Unterseite der Transportplatten vorgesehene Vertiefung eingeklebt werden können. Dadurch wird erreicht, daß einerseits die Informationen auch im überlappenden Bereich der Förderelemente sichtbar sind, andererseits der Informationsträger gegen Abrieb geschützt ist.
Ein wesentlicher Nachteil dieses Standes der Technik ist, daß die Werkstoffauswahl für die Transportplatten aufgrund der geforderten Transparenz sehr eingeschränkt ist und die Materialkosten für Polycarbonat hoch sind. Darüber hinaus ist Polycarbonat ein sehr guter Isolator, so daß gerade bei sich überlappenden Transportplatten die Gefahr einer statischen Aufladung besteht.

Das Bedrucken von kautschukhaltigen Oberflächen ist bekannt. Das Problem bei den bekannten Druckverfahren des Standes der Technik ist, daß sich die Druckfarbe leicht von dem bedruckten Untergrund ablöst. Insbesondere bei mechanisch stark beanspruchten Oberflächen ist keine ausreichende Verbindung zwischen Druckfarbe und bedruckter Oberfläche realisierbar.
Ein Grund für dieses Problem ist, daß die handelsüblichen kautschukhaltigen Materialien eine geringe Menge an Trennmitteln aufweisen, die zur Verringerung der Klebrigkeit und leichteren Ablösung des Verarbeitungsgutes von Walzen oder Formen dienen. Hierzu werden den Kautschukmischungen Wachse, Fette, Stearate oder Silikonöle beigemischt, die im folgenden als Wachs- oder Schutzadditive bezeichnet werden.
Daher sind diese Verfahren nicht geeignet für das Bedrucken mechanisch hoch beanspruchter, kautschukhaltiger Oberflächen.

Die DE 196 40 834 betrifft ein Verfahren zum Aufdrucken von Kennzeichnungen auf Gummiartikeln, bei dem vor dem Bedrucken auf dem Kennzeichnungsbereich eine Sperrschicht aus einer speziellen Gummimischung aufgebracht wird, die keine Wachs- oder Schutzadditive aufweist. Hierdurch soll erreicht werden, daß die Farbkennzeichnung intensiv und damit nicht ablösbar an dem Gummiartikel anhaftet.
Der Nachteil bei diesem Verfahren ist, daß der zu bedruckende Gummiartikel einem zweiten Vulkanisierungsschritt mit einer speziellen Gummimischung unterzogen werden muß, was sehr aufwendig ist.

Des weiteren ist aus der WO 9621701 ein Verfahren zum Bedrucken von kautschukhaltigen Oberflächen insbesondere von Handschuhen bekannt. Hierin ist offenbart, daß es grundsätzlich ein Problem darstellt, solche Oberflächen dauerhaft zu bedrucken. Es werden synthetischen Kautschuk enthaltende Beschichtungszusammensetzungen zum Bedrucken von kautschukhaltigen Oberflächen vorgeschlagen, bei deren Verwendung der Aufdruck nicht sofort von der Oberfläche abwischbar ist. Allerdings ergibt sich aus den angegebenen Versuchsbeispielen, daß ein derartiger Aufdruck unter der Einwirkung eines bis zu 40maligen Reibens mit einem Haushaltsreiniger "PineSol" von der Oberfläche entfernbar ist.

Es ist eine Aufgabe der vorliegenden Erfindung, eine Transportplatte derart auszugestalten, daß sie als Werbeträger eingesetzt werden kann, wobei die Werbung dauerhaft auf der Transportplatte erhalten bleibt und insbesondere bei sich überlappenden Transportplatten keine Probleme mit statischer Aufladung bestehen.

Diese Aufgabe wird bevorzugt dadurch gelöst, daß auf die Kautschuk enthaltende Oberfläche der Transportplatte ein Aufdruck aufgebracht ist.
Somit wird, anders als im Stand der Technik, kein separater Informationsträger verwendet, der auf die Transportplatte aufgebracht wird, sondern vielmehr ist die Transportplatte selbst der Informationsträger.
Hieraus ergibt sich gegenüber dem Stand der Technik der wesentliche Vorteil, daß auf die bislang als Informationsträger verwendeten Kunststoffolien verzichtet werden kann. Somit wird das Problem des Ablösens der Folie insbesondere im Bereich sich überlappender Transportplacten wirksam umgangen. Auch wird durch Weglassen der Folie das Problem der statischen Aufladung minimiert, da die Folie als möglicher Ladungsträger entfällt.
Darüber hinaus ist die Transponplatte vergleichsweise kostengünstig herstellbar, da der aurwendige Arbeitsgang des Aufklebens eines Informationsträgers auf die Transportplatte entfällt.

Unter dem Begriff "Kautschuk" werden Hochpolymere, vorwiegend plastische Stoffe, verstanden, die durch Vulkanisation in den Zustand der Hochelastizität übergehen und dabei ihre Löslichkeit in organischen Lösungsmitteln verlieren. Unter diesem Oberbegriff fallen insbesondere:
- Naturkautschuk (nach der Norm ASTM-D 1600, auch als "natural rubber" bezeichnet) und
- die sogenannten Synthesekautschuke, wie z.B. Polyurethankautschuk, Buna, EPDM, EPM, Cyclokautschuk, Polycyclopentenkautschuk etc.

Als Synthesekautschuke, die insbesondere für die vorliegende Erfindung einsetzbar sind, sind Styrol-Butadienkautschuk (SBR), Isopren-Kautschuk (Polyisopren), Polybutadien, Polychloropren (Chloropren-Kautschuk), Acrylnitril/Butadien-Kautschuk (Nitrilkautschuk), Butylkautschuk, Brombutylkautschuk, Ethylen-Propylen-Kautschuk (EPM oder EPDM), Silikonkautschuk, Ethylen/Vinylacetat-Kautschuk (EVA, EVM), Polynorbornen-Kautschuk (PNR), Acrylkautschuk (ACM, ANM) zu nennen.

Besonders zu erwähnen sind Naturkautschuk und/oder Polybutadien, insbesondere hochgesättigte Kautschuke wie z.B. Terpolymere aus Ethylen, Propylen und Dienen (EPMD), Butylkautschuk, sowie Styrol-Butadiencopolymere (SBR) und Nitrilkautschuke, insbesondere Nitrilbutadienkautschuk (NBR).
Das zu bedruckende Material enthält an der Oberfläche vorzugsweise zwischen 10 und 80 Gew.-% Kautschuk. Es können aber auch Mischungen der zuvor beschriebenen Kautschuke verwendet werden.

Ebenso ist es möglich, daß das zu bedruckende, kautschukhaltige Material zusätzlich noch andere Polymere und/oder übliche Additive enthalten. Als zusätzliche Polymere sind insbesondere Polyvinylchlorid, Polyethylen und Polypropylen zu nennen. Unter dem Begriff "übliche Additive" werden Füllstoffe, Pigmente, Weichmacher, Mastiziermittel, Alterungsmittel, Treibmittel, Flammschutzmittel, Antistatika, Haftmittel etc. verstanden.

Um die Reibung zwischen dem Aufdruck und auf der Transportplatte aufliegenden Gepäckstücken bzw. einer überlappenden Transportplatte möglichst zu minimieren, hat sich eine Dicke des Aufdrucks als vorteilhaft herausgestellt, die eine Höhe von 10 um nicht überschreitet.

Die Auswahl des Transportplattenmaterials sowie der Druckfarbe und des Druckverfahrens ist grundsätzlich frei, sofern die Anforderungen an das elektrostatische Verhalten sowie die Qualitätskriterien in bezug auf Abriebfestigkeit des Aufdrucks erfüllt werden.

Für das eigentliche Bedrucken können alle Druckverfahren und Druckfarben verwendet werden, mit denen ein Bedrucken von flexiblen Oberflächen möglich ist. Als bevorzugte Druckfarben haben sich für den Siebdruck geeigneten Farben und -tinten herausgestellt.

Als Druckfarbe kann eine Farbe auf Polyurethanbasis verwendet werden, insbesondere eine Polyurethandruckfarbe auf Zweikomponentenbasis, wobei als Vernetzer ein blockiertes oder nicht blockiertes Polyisocyanat verwendet wird.
Als Beispiel für eine geeignete Druckfarbe ist die Zweikomponentenfarbe der Firma Wiederholt vom Typ ZE 1690/60 zu nennen, die nach Zugabe von einer Menge zwischen 1 bis 5 Gew.-% Härter des Typs Z/H und einer Menge von 1 bis 10 Gew.-% Verdünner des Typs ZVH eine dauerhafte Vernetzung zwischen Druckfarbe und Oberfläche bewirkt.

Es haben sich auch Druckfarben für das Bedrucken von insbesondere SBR als gut geeignet herausgestellt, die entweder Methylenchlorid und/oder Chloroform enthalten.

Eine andere geeignete Druckfarbe enthält 1 bis 5 Gew.-% Phthalsäureester mit 1 bis 6 Kohlenstoffatomen im Alkoholrest, insbesondere Phthalsäuredibutylester. Sie kann zusätzlich 10 bis 25 Gew.-% Isopropylglykolacetat enthalten, ebenso wie 10 bis 25 Gew.-% Ethoxypropanol und/oder 25 bis 50 Gew.-% 1-Methylpropylenglykol-2.

Als geeignete Druckfarbe ist unter anderem die unter der Handelsbezeichnung Colorstar CS vertriebene Siebdruckfarbe der Firma Sericol, Großbritannien, zu nennen. Diese Farbe ist bekannt für das Bedrucken Papier und Karton, synthetisches Papier, beschichtete Hartfaserplatten, Holz und Glas. Diese Druckfarbe kann unter anderem zusammen mit den Verdünnern ZC-530, ZC-568, ZC-533, ZC-535, ZC-534 und ZC-645 verwendet werden.

Um durch das zusätzliche Bedrucken eine Verschlechterung der antistatischen Eigenschaften der zu bedruckenden Oberflächen zu verhindern, kann der Druckfarbe ein handelsübliches Antistatikum zugemischt werden. Als besonders geeignetes Antistatikum für das erfindungsgemäße Verfahren haben sich die Produkte Kataphor und Texaphor von der Firma coates-screen-inks GmbH (vormals Fa. Wiederhold) erwiesen, die der Druckfarbe in einer Menge von 1 bis 3 Vol.-% beigemischt werden.
Hierdurch wird erreicht, daß beispielsweise die Richtlinie für die Vermeidung von Zündgefahren infolge elektrostatischer Aufladung des Hauptverbands der gewerblichen Berufsgenossenschaften (ZH 1/200 in der Fassung von Oktober 1989) eingehalten werden.
Diese Eigenschaft ist überall dort von Interesse, wo die antistatischen Eigenschaften der zu bedruckenden Materialien eine wesentliche Rolle spielen (beispielsweise in explosionsgefährdeten Bereichen) und den Oberflächen dieser Materialien durch das Bedrucken dekorative oder kennzeichnende Eigenschaften verliehen werden sollen, ohne dabei die antistatischen Eigenschaften wesentlich zu verschlechtern.

Die erfindungsgemäße Transportplatte kann insbesondere als Werbeträger auf Gepäckförderbändern, beispielsweise in Flughäfen, verwendet werden.

In einem weiteren Aspekt der Erfindung besteht die Aufgabe der vorliegenden Erfindung darin, ein einfaches Druckverfahren für das Bedrucken von kautschukhaltigen Oberflächen bereitzustellen.
Diese Aufgabe wird erfindungsgemäß gelöst durch ein Verfahren zum Bedrucken von Kautschuk enthaltenden Oberflächen, das folgende Verfahrensschritte aufweist:
a) Reinigen der Oberfläche mit einem entfettenden Lösungsmittel;
b) Erhitzen der Oberfläche auf eine Temperatur von mindestens 75 °C für eine Dauer von mindestens zwei Sekunden;
c) Abkühlen der Oberfläche;
d) Aufbringen der Druckfarbe.

Durch den ersten Verfahrensschritt wird erreicht, daß die in den Kautschuk enthaltenden Materialien enthaltenen Wachs- oder Schutzadditive durch einen Spülvorgang an der Oberfläche entfernt werden.
Mit dem zweiten Verfahrensschritt wird erreicht, daß die im Inneren der zu bedruckenden Materialien, beispielsweise in den Zwischenräumen und Kapillaren der kautschukhaltigen Materialien, enthaltenden Wachs- oder Schutzadditive, die durch den zuvor beschriebenen Spülvorgang nicht herausgelöst werden, sich verflüssigen und sich während des Abkühlvorganges von der Oberfläche in das Innere des zu bedruckenden Materials, z.B. aufgrund der Kapillarwirkung, zurückziehen.
Auf diese Weise wird erreicht, daß die Wachs- oder Schutzadditive weiter in das Innere der kautschukhaltigen Materialien zurückgedrängt werden können, als es durch eine chemische Oberflächenbehandlung der Fall ist.

Nach Abkühlen der Oberfläche auf eine geeignete Temperatur wird zuletzt der eigentliche Druckvorgang mit einem dem Fachmann an sich bekannten Verfahren durchgeführt.

Das Zurückdrängen der Wachs- oder Schutzadditive in das Innere des kautschukhaltigen Materials bewirkt, daß diese eine wesentlich längere Zeit brauchen, um vom Inneren des kautschukhaltigen Materials wieder an die Grenzschicht zwischen Oberfläche und Druckfarbe zu diffundieren. Sobald aber die Wachs- oder Schutzadditive an diese Grenzschicht diffundiert sind, ist eine verringerte Haftung zwischen Druckfarbe und kautschukhaltiger Oberfläche zu beobachten. Hierdurch kann eine gezielte Zeiteinstellung zwischen der Haftung und der Ablösung der Druckfarbe auf kautschukhaltigen Oberflächen erzielt werden.

Als entfettende Lösungsmittel sind insbesondere nicht substituierte oder substituierte Alkane oder Alkohole mit 6 bis 12 Kohlenstoffatomen, Terpene, Ketone, insbesondere Cyclohexanon, oder Mischungen hiervon zu bezeichnen.
Als besonders geeignet hat sich eine handelsübliche Mischung verschiedener Kohlenwasserstoffe erwiesen, die unter der Bezeichnung WBC 16 als Kaltentfetter von der Firma Wilhelm E.H. Biesterfeld, Köln, Deutschland, vertrieben wird.

Das Erhitzen der Oberfläche kann mit allen geeigneten Mitteln durchgeführt werden. Als besonders hilfreich hat sich das Erhitzen mit einer heißen Flamme, speziell mit einer Propangasflamme mit einer äußeren Temperatur zwischen 200 und 600 °C, erwiesen.
Ebenso ist aber auch eine Oberflächenbehandlung mit einem Heißluftgebläse möglich.
Gemäß einer bevorzugten Ausführungsform der vorliegenden Erfindung wird die Oberfläche der kautschukhaltigen Materialien auf eine Temperatur zwischen 85 und 120 °C erhitzt, die Dauer dieses Vorganges liegt vorzugsweise in einem Bereich von 5 bis 60 Sekunden.

Wird als Druckfarbe die Zweikomponentenfarbe der Firma Wiederholt vom Typ ZE 1690/60 in der vorstehend genannten Weise verwendet, bewirkt eine Erhitzung der kautschukhaltigen Oberfläche auf eine Temperatur von 85 °C für eine Dauer von 5 Sekunden eine Haftung für einen Zeitraum von etwa 12 Wochen, während eine Erhitzung der Oberfläche für eine Dauer von mehr als 10 Sekunden auf eine Temperatur von 120 °C zu einer Haftung bis 6 Monaten führt.

Insofern kann der Fachmann durch einfache Versuche für einen bestimmten Druckfarbentyp den Einfluß der Temperatur und der Dauer des Erhitzungsvorgangs auf die gewünschte Zeitdauer der Haftung der Druckfarbe bestimmen.

Als bevorzugtes Druckverfahren wird ein Siebdruckverfahren angewendet. Dabei kann es von Vorteil sein, die auf die Oberfläche aufgebrachte Farbe, insbesondere bei einer Temperatur von 70 bis 100° C, warmzutrocknen. Bei Bedarf kann die Transportplatte sowohl vor wie auch nach dem Bedrucken antistatisch behandelt werden.

Das erfindungsgemäße Verfahren kann überall dort angewendet werden, wo ein Bedrucken von kautschukhaltigen Materialien erforderlich oder nützlich ist. Insbesondere kann das Verfahren bei dem Bedrucken von mechanisch stark beanspruchten Oberflächen eingesetzt werden.

Besonders bevorzugt ist das Bedrucken von Werbeträgern. Durch die Wahl der Temperatur während des Erhitzungsvorgangs des Oberfläche sowie durch die Dauer des Erhitzungsvorgangs können erstmals Werbeträger so bedruckt werden, daß für eine gewünschte Dauer eine Haftung erzielt wird, die starken mechanischen Belastungen standhält.
Nach dem gewünschten Zeitraum kann die Druckfarbe aufgrund der nachlassenden Haftung durch einfache, mechanische Mittel entfernt werden, was insbesondere ein direktes Wiederverwenden oder einfaches Recycling ermöglicht. Auch ist es möglich, den Aufdruck nach dem gewünschten Zeitraum mit Reinigungsmitteln, beispielsweise mit dem Verdünnungs- und Reinigungsmittel ZC 530 von Sericol oder mit Cyclohexanon, den Aufdruck zu entfernen und erneut einem Druckprozeß zuzuführen

Geeignete Werbeträger sind insbesondere Förderbänder, wie sie beispielsweise als Transportbänder bei Kassen in Supermärkten oder als Gepäckförderbänder in Flughäfen zu finden sind.

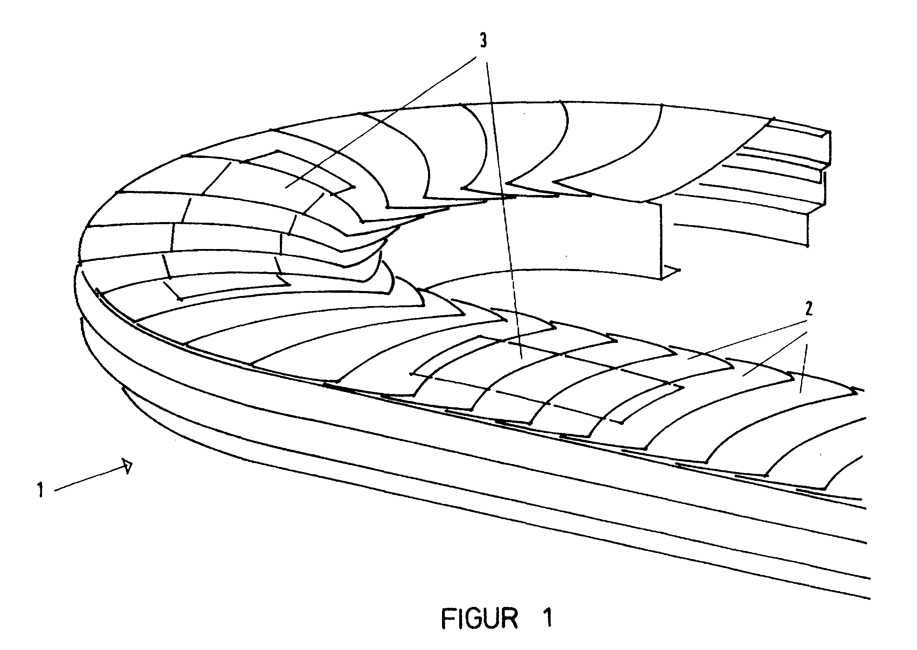

Figur 1 zeigt eine mögliche Ausführungsform eines Förderbandes **1** mit sich überlappenden Transportplatten **2**. Diese Transportplatten **2** weisen an ihrer Oberseite einen Aufdruck **3** auf. Dieser Aufdruck **3** kann über die gesamte Oberfläche der Transportplatte **2** angeordnet sein unabhängig davon, daß sich die überlagernden Transportplatten **2** in einem Kurvenbereich des Förderbandes relativ zueinander verschieben.

## Patentansprüche

1. Verfahren zum Bedrucken von Oberflächen Kautschuk enthaltender Materialien, das folgende Verfahrensschritte aufweist:
a) Reinigen der Oberfläche mit einem entfettenden Lösungsmittel;
b) Erhitzen der Oberfläche auf eine Temperatur von mindestens 75 °C für eine Dauer von mindestens zwei Sekunden;
c) Abkühlen der Oberfläche;
d) Aufbringen der Druckfarbe.

2. Verfahren nach Anspruch 1, **dadurch gekennzeichnet, daß** das entfettende Lösungsmittel ausgewählt ist aus der Gruppe von nicht substituierten oder substituierten Alkanen oder Alkoholen mit 6 bis 12 Kohlenstoffatomen, Terpenen, Ketonen, insbesondere Cyclohexanon, oder Mischungen davon.

3. Verfahren nach Anspruch 1 oder 2, **dadurch gekennzeichnet, daß** die Oberfläche auf eine Temperatur zwischen 85 und 120 °C erhitzt wird.

4. Verfahren nach einem der vorstehenden Ansprüche, **dadurch gekennzeichnet, daß** die Dauer des Erhitzens zwischen 5 und 60 Sekunden liegt.

5. Verfahren nach einem der vorstehenden Ansprüche, **dadurch gekennzeichnet, daß** die aufgebrachte Druckfarbe warmgetrocknet wird, insbesondere bei einer Temperatur von 70 bis 100°C, vorzugsweise bei 80° C.

6. Verfahren nach einem der vorstehenden Ansprüche, **dadurch gekennzeichnet, daß** die Kautschuk enthaltende Oberfläche die Oberfläche einer Transportplatte eines endlosen, modularen Förderbandes (1) ist.

7. Verfahren nach Anspruch 6, **dadurch gekennzeichnet, daß** die einen Kautschuk enthaltende Oberfläche der Transportplatte ein Material mit 10 bis 80 Gew.-% Naturkautschuk und/oder Synthesekautschuk, insbesondere Polybutadien, hochgesättigte Kautschuke wie Terpolymere aus Ethylen, Propylen und Dienen (EPMD), Butylkautschuk, Styrol-Butadiencopolymere (SBR) oder Nitrilkautschuk, insbesondere Nitrilbutadienkautschuk (NBR), aufweist.

8. Verfahren nach Anspruch 6 oder 7, **dadurch gekennzeichnet, daß** die Dicke des Aufdrucks (3) 10 µm nicht übersteigt.

9. Verfahren nach einem der Ansprüche 6 bis 8, **dadurch gekennzeichnet, daß** der Aufdruck (3) mit einer für ein Siebdruckverfahren geeigneten Druckfarbe oder -tinte hergestellt wird.

10. Verfahren nach Anspruch 9, **dadurch gekennzeichnet, daß** die Druckfarbe eine solche auf Polyurethanbasis, insbesondere auf Zweikomponentenbasis mit einem blockierten oder nicht blockierten Polyisocyanat als Vernetzer, ist.

11. Verfahren nach Anspruch 9 oder 10, **dadurch gekennzeichnet, daß** die Druckfarbe Methylenchlorid und/oder Chloroform enthält.

12. Verfahren nach Anspruch 9, **dadurch gekennzeichnet, daß** die Druckfarbe 1 bis 5 Gew.-% Phthalsäureester mit 1 bis 6 Kohlenstoffatomen im Alkoholrest, insbesondere Phthalsäuredibutylester, enthält.

13. Verfahren nach Anspruch 12, **dadurch gekennzeichnet, daß** die Druckfarbe 10 bis 25 Gew.-% Isopropylglykolacetat enthält.

14. Verfahren nach Anspruch 12 oder 13, **dadurch gekennzeichnet, daß** die Druckfarbe 10 bis 25 Gew.-% Ethoxypropanol enthält.

15. Verfahren nach einem der Ansprüche 12 bis 14, **dadurch gekennzeichnet, daß** die Druckfarbe 25 bis 50 Gew.-% 1-Methylpropylenglykol-2 enthält.

16. Verfahren nach einem der Ansprüche 9 bis 15, **dadurch gekennzeichnet, daß** die Druckfarbe zusätzlich ein Antistatikum enthält.

17. Verwendung des Verfahrens nach einem der Ansprüche 1 bis 5 zum Bedrucken von mechanisch stark beanspruchten Oberflächen.

18. Verwendung des Verfahrens nach Anspruch 17 zum Bedrucken von Werbeträgern.

## Claims

1. Method for printing surfaces of rubber-containing materials, which exhibits the following procedural steps:
a) Cleaning the surface with a degreasing solvent;
b) Heating the surface to a temperature of at least 75 °C for a duration of at least two seconds;
c) Cooling the surface;
d) Applying the printing ink.

2. Method according to Claim 1, **characterised in that** the degreasing solvent is selected from the group of non-substituted or substituted alkanes or alcohols having 6 to 12 carbon atoms, terpenes, ketones, especially cyclohexanone, or mixtures thereof.

3. Method according to Claim 1 or 2, **characterised in that** the surface is heated to a temperature between 85 and 120 °C.

4. Method according to one of the preceding claims, **characterised in that** the duration of the heating lies between 5 and 60 seconds.

5. Method according to one of the preceding claims, **characterised in that** the applied printing ink is dried under heat, especially at a temperature of 70 to 100 °C, preferably at 80°C.

6. Method according to one of the preceding claims, **characterised in that** the rubber-containing surface is the surface of a transport plate of a continuous, modular conveyor belt (1).

7. Method according to Claim 6, **characterised in that** the rubber-containing surface of the transport plate exhibits a material containing 10 to 80 wt.% natural rubber and/or synthetic rubber, especially polybutadiene, highly saturated rubbers such as terpolymers made of ethylene, propylene and dienes (EPMD), butyl rubber, styrene butadiene copolymers (SBR) or nitrile rubber, especially nitrile butadiene rubber (NBR).

8. Method according to Claim 6 or 7, **characterised in that** the thickness of the imprint (3) does not exceed 10 µm.

9. Method according to one of Claims 6 to 8, **characterised in that** the imprint (3) is produced using a printing ink or ink suitable for a screen printing method.

10. Method according to Claim 9, **characterised in that** the printing ink is a polyurethane-based ink, especially a two-component base with a blocked or non-blocked polyisocyanate as cross-linking agent.

11. Method according to Claim 9 or 10, **characterised in that** the printing ink contains methylene chloride and/or chloroform.

12. Method according to Claim 9, **characterised in that** the printing ink contains 1 to 5 wt.% phthalic acid ester with 1 to 6 carbon atoms in the alcohol residue, especially phthalic acid dibutyl ester.

13. Method according to Claim 12, **characterised in that** the printing ink contains 10 to 25 wt. % isopropyl glycolacetate.

14. Method according to Claim 12 or 13, **characterised in that** the printing ink contains 10 to 25 wt.% ethoxypropanol.

15. Method according to one of Claims 12 to 14, **characterised in that** the printing ink contains 25 to 50 wt.% 1-methylpropylene glycol-2.

16. Method according to one of Claims 9 to 15, **characterised in that** the printing ink also contains an antistatic agent.

17. Method according to one of Claims 1 to 5 for printing strongly mechanically stressed surfaces.

18. Use of the method according to Claim 17 for printing advertising media.

## Revendications

1. Procédé pour l'impression de surface de matières contenant du caoutchouc, comportant les étapes suivantes:
a) nettoyage de la surface avec un solvant dégraissant;
b) chauffage de la surface à une température d'au moins 75 °C pendant une durée d'au moins deux secondes;
c) refroidissement de la surface;
d) application de l'encre d'impression.

2. Procédé selon la revendication 1, **caractérisé en ce que** le solvant dégraissant est sélectionné dans un groupe d'alcanes non substitués ou substitués ou d'alcools avec 6 à 12 atomes de carbone, de terpène, de cétone, notamment de cyclohéxanone ou leurs mélanges.

3. Procédé selon la revendication 1 ou 2, **caractérisé en ce que** la surface est chauffée à une température entre 85 et 120 °C.

4. Procédé selon une des revendications précédentes, **caractérisé en ce que** la durée du chauffage est de 5 à 60 secondes.

5. Procédé selon une des revendications précédentes, **caractérisé en ce que** l'encre d'impression appliquée est séchée à chaud, notamment à une température de 70 à 100 °C, de préférence à 80 °C.

6. Procédé selon une des revendications précédentes, **caractérisé en ce que** la surface contenant du caoutchouc est la surface d'un plateau de transport d'une bande convoyeuse sans fin modulaire (1).

7. Procédé selon la revendication 6, **caractérisé en ce que** la surface contenant du caoutchouc du plateau de transport présente une matière comportant 10 à 80 % en poids de caoutchouc naturel et/ou caoutchouc de synthèse, notamment du polybutadiène, des caoutchoucs fortement saturés comme des terpolymères en éthylène, propylène et diènes (EPMD), du caoutchouc butylique, des copolymères de styrol-butadiène (SBR) ou des caoutchoucs au nitrile, notamment du caoutchouc au nitrilbutadiène (NBR).

8. Procédé selon la revendication 6 ou 7, **caractérisé en ce que** l'épaisseur de l'impression (3) ne dépasse pas 10 µm.

9. Procédé selon une des revendications 6 à 8, **caractérisé en ce que** l'impression (3) est réalisée avec une couleur ou encre d'impression convenant pour procédé de sérigraphie.

10. Procédé selon la revendication 9, **caractérisé en ce que** l'encre d'impression est à base de polyuréthane, particulièrement de deux composantes avec un polyisocyanate bloqué ou non bloqué comme réticulateur.

11. Procédé selon la revendication 9 ou 10, **caractérisé en ce que** l'encre d'impression contient du chlorure de méthylène et/ou du chloroforme.

12. Procédé selon la revendication 9, **caractérisé en ce que** l'encre d'impression contient de 1 à 5 % en poids d'ester d'acide phtalique avec 1 à 6 atomes de carbone dans le reste d'alcool, particulièrement du di-butylester d'acide phtalique.

13. Procédé selon la revendication 12, **caractérisé en ce que** l'encre d'impression contient 10 à 25 % en poids de glycolacétate d'isopropyle.

14. Procédé selon la revendication 12 ou 13, **caractérisé en ce que** l'encre d'impression contient 10 à 25 % en poids d'éthoxypropanol.

15. Procédé selon une des revendications 12 à 14, **caractérisé en ce que** l'encre d'impression contient de 25 à 50 % en poids de 1-glycol de méthylpropylène-2.

16. Procédé selon une des revendications 9 à 15, **caractérisé en ce que** l'encre d'impression contient en plus un antistatique.

17. Utilisation du procédé selon une des revendications 1 à 5 pour l'impression de surfaces fortement sollicitées au niveau mécanique.

18. Utilisation du procédé selon la revendication 17 pour l'impression de supports publicitaires.
